# EUROPÄISCHE PATENTSCHRIFT

(11) **EP 1 571 890 B1**
(45) Veröffentlichungstag und Bekanntmachung des Hinweises auf die Patenterteilung: **19.05.2010**
(21) Anmeldenummer: 05101362.1
(22) Anmeldetag: 23.02.2005
(51) Int. Cl.: H05B 6/12

(54) **Erhitzungsstation für Gruppenverpflegung**
Heating location for groups catering
Station de chauffage pour restauration collective.

(30) Priorität: 04.03.2004 DE 102004010674
(43) Veröffentlichungstag der Anmeldung: 07.09.2005
(73) Patentinhaber: INDUCS AG, 9100 Herisau (CH)
(72) Erfinder: Thomann, Albert, 9100 Herisau (CH)
(74) Vertreter: Betten & Resch

(56) Entgegenhaltungen:
- EP-A- 0 858 722
- EP-A- 1 172 047
- DE-U1- 29 620 603
- US-A- 4 881 590

## Beschreibung

In Betrieben, Behörden, Kliniken, Flugzeugen usw. werden heute für die Essensempfänger oftmals Fertigmenüs ausgegeben, die zuvor in Kühlbehältern gelagert und vor der Ausgabe in zumeist fahrbaren Behältern, sog. Erhitzungsstationen, auf Tabletts erhitzt und warmgehalten werden. Solche Erhitzungsstationen sind gut wärmeisoliert und könnten daher gleichzeitig als Kühlschränke ausgebildet sein. Erhitzt wird meist über einen Elektroanschluss, durch den die Tabletts mittels Heißluft, Widerstandsheizung oder induktiv beheizt werden.

Die DE 296 20 603 U1 beschreibt einen Speisen-Transportwagen, in dem auf Tabletts in metallischen Speisebehältern befindliche Speisen mittels Induktionsheizung warmgehalten werden, wobei bei jeder Induktionsspule ein Temperatursensor für eine Sicherhaitsabschaltung der jeweiligen Spule als Überhitzungsschutz vorgesehen ist.

Die Erfindung betrifft Erhitzungsstationen für Gruppenverpflegung mit Tabletts, auf denen Fertigmenüs induktiv erhitzt und warmgehalten werden, und wobei jedes Tablett so viele Induktionsspulen aufweist, wie das Fertigmenü Speisen und Getränke, d. h. Geschirre mit induktiv erhitzbarem Boden enthält. Dabei ist es bisher ein Problem, alle Tabletts auf gleiche Temperatur zu bringen und dort zu halten, weil die Tabletts auf den Randplätzen stärker auskühlen als die weiter innen befindlichen. Noch problematischer ist es, wenn gleichzeitig verschiedene Fertigmenüs mit unterschiedlichem Wärmebedarf in derselben Erhitzungsstation aufgewärmt werden sollen. Die Erhitzung verschiedener Speisen eines Fertigmenüs auf einem Tablett auf unterschiedliche Temperaturen ist bisher überhaupt nicht möglich.

Die Erfindung löst diese Probleme dadurch, dass jeder Induktionsspule eines Tabletts eine Antenne zugeordnet ist, die in an sich bekannter Weise (EP 0858722) berührungslos durch Hochfrequenz-Funk die Temperatur des Bodens des über der Induktionsspule stehenden Geschirrs ermittelt, wobei diese Temperatur laufend an eine in jedes Tablett eingebaute Regelelektronik gemeldet wird, welche die Induktionsleistung der betreffenden Induktionsspule derart steuert, dass eine voreinstellbare, der Speise entsprechende Temperatur erreicht und eingehalten wird Diese Anordnung arbeitet absolut verzögerungsfrei und mit einer Regelgenauigkeit von weniger als 1°C

Dabei kann jedes Tablett nur eine Regelelektronik enthalten, die gleichzeitig als Hochfrequenzquelle für die Antennen des betreffenden Tabletts dient, die Bodentemperaturen der verschiedenen Geschirre auf dem Tablett über die entsprechenden Antennen periodisch nacheinander abfragt und die Induktionsleistungen der verschiedenen Induktionsspulen entsprechend steuert. So wird erreicht, dass die spezielle Temperatur für jede Speise der Fertigmenüs gesondert eingestellt werden kann.

Da es für die Genauigkeit der Temperaturmessung durch die Antennen darauf ankommt, dass die Geschirre auf dem Tablett stets genau an der richtigen Stelle stehen, befindet sich im Tablett über jeder Induktionsspule eine dem betreffenden Geschirr angepasste Markierung, welche die genaue Positionierung des Geschirrs gewährleistet. Sie kann z. B. als umlaufender Begrenzungssteg oder als Vertiefung ausgeführt sein Außerdem müssen die physikalischen Eigenschaftswerte der Böden sämtlicher Geschirre definiert sein, d h, aus überwachter Produktion stammen und einheitliche Werte von Permeabilität mit Temperaturkoeffizient und spezifischem Widerstand mit Temperaturkoeffizient aufweisen, so dass alle Antennen stets unter gleichen Bedingungen arbeiten und die Geschirrbodentemperaturen gemäß einer einheitlichen Kalibrierung exakt wiedergeben können.

Die Erhitzungsstation hat einen zentralen Induktions-Leistungsgenerator und eine zentrale Informationseinheit, die beide an das Netz angeschlossen sind, sowie Übertrager auf den Etagen für die Tabletts, von denen Induktionsleistung und Informationen kontaktlos transformatorisch auf die Regelelektroniken der einzelnen Tabletts übertragen werden. Die kontaktlose Übertragung gewährleistet eine größere Betriebssicherheit Die Übertrager für Informationen arbeiten in beiden Richtungen, so dass einerseits von der zentralen Informationseinheit das Erhitzungsprogramm für jedes Tablett entsprechend dem darauf befindlichen Fertigmenü, das der betreffende Essensteilnehmer für sich geordert hat, vorgegeben und in die Regelelektronik des Tabletts übertragen werden kann, und dass andererseits von der Regelelektronik eine Meldung an die zentrale Informationseinheit gegeben werden kann, sobald die Speisen des betreffenden Fertigmenüs die vorgeschriebenen Temperaturen erreicht haben und die Regelelektronik auf Warmhalten umgeschaltet hat, das betreffende Tablett also ausgabebereit ist. Auf diese Weise können auch die strengen HACCP-Vorschriften für Lebensmittel und Gastronomie sicher eingehalten werden Gleichzeitig ist ein hoher Grad von Individualität insofern gegeben, als in einer Erhitzungsstation verschiedene Fertigmenüs gleichzeitig unterschiedlich erwärmt werden können.

Es ist zweckmäßig, sämtliche Funktionsteile eines Tabletts (Induktionsspulen, Antennen, Regelelektronik, Übertragerhälften) auf einem gemeinsamen Träger anzuordnen, der in das Tablett eingegossen ist oder selbst das Tablett bildet. Der gemeinsame Träger kann sogar eine Leiterplatte sein, die in Tablettform umschäumt wird.

Um die Übertragung unterschiedlicher Temperaturen verschiedener Fertigmenüs zwischen den Tabletts zu unterbinden, trägt in weiterer Ausbildung der Erfindung die Unterseite jedes Tabletts eine wärmeisolierende Schicht.

Die Erfindung erstreckt sich selbstverständlich auch auf Geräte zur Erhitzung von einzelnen Tabletts mit Fertigmenüs.

In den Figuren ist ein Ausführungsbeispiel des Gegenstandes der Erfindung vereinfacht dargestellt.

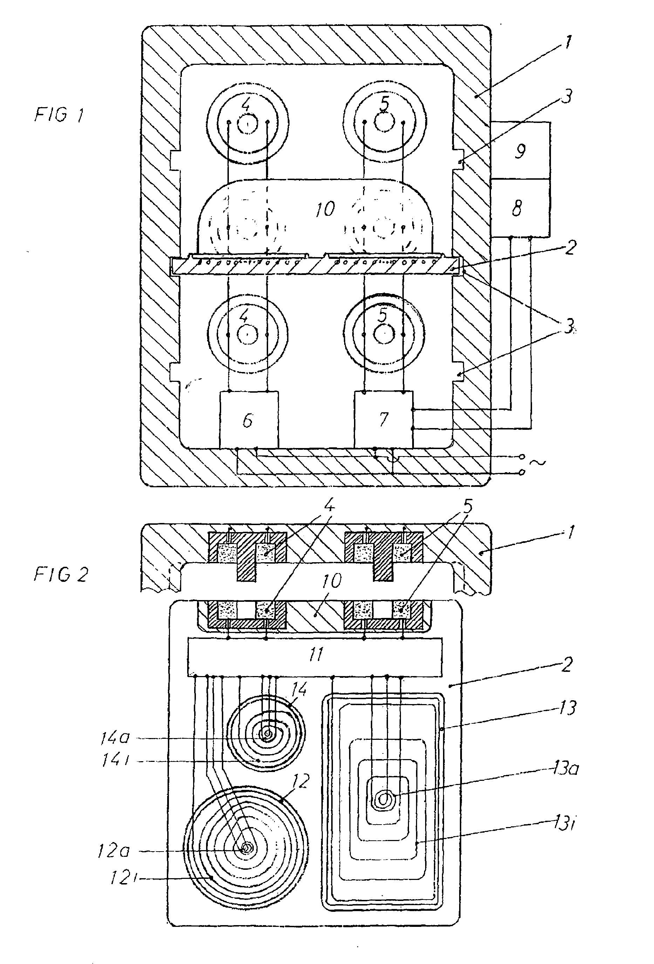

Figur 1 zeigt im Vertikalschnitt die Frontansicht einer Erhitzungsstation 1, die Etagen für drei Tabletts 2 aufweist, von denen nur das mittlere dargestellt ist In der Praxis sind meist wesentlich mehr Etagen vorhanden. Es können auch mehrere Etagenstapel innerhalb einer Erhitzungsstation nebeneinander angeordnet sein Die Tabletts 2 werden in die Rillen 3 eingeschoben, die in den gut wärmeisolierenden Wänden der Erhitzungsstation 1 eingelassen sind Auf jeder Etage befindet sich eine kontaktlose Übertragungsstation mit einem transformatorischen Übertrager 4 für die Induktionsleistung und einem transformatorischen Übertrager 5 für Informationen in beiden Richtungen, die, wie in Figur 2 im Horizontalschnitt dargestellt, jeweils aus zwei Hälften bestehen, die zum Eingriff kommen, wenn das Tablett ganz eingeschoben wird Um den vollständigen Einschub bis zum Anschlag zu gewährleisten, kann ein nicht dargestellter Schnappmechanismus oder ein Haftmagnet zwischen Tablett 2 und der Rückwand der Erhitzungsstation 1 vorgesehen werden. Die in die Rückwand eingelassenen Hälften der Übertrager 4 bzw. 5 sind, wie in Figur 1 dargestellt, an einen zentralen Induktionsgenerator 6 bzw eine zentrale Informationseinheit 7 angeschlossen. Die Informationseinheit 7 ist an die außen an der Erhitzungsstation 1 angebrachte Tastatur 8 angeschlossen, an der für die Adressen der einzelnen Tabletts 2 die für die verschiedenen Menüs geltenden Erhitzungsprogramme eingegeben werden Das gesamte Programm wird auf dem Bildschirm 9 angezeigt, auf dem auch ersichtlich ist, welche Tabletts 2 fertig erhitzt sind und entnommen werden können.

Figur 2 zeigt ein Tablett 2 in der Draufsicht. Es trägt an seinem hinteren Rand einen im Schnitt dargestellten Aufbau 10, in den die Ubertragerhälften 4 und 5 eingelassen sind Sie sind an die in die Fläche des Tabletts 2 eingelassene, als Leiterplatte ausgebildete Regelelektronik 11 angeschlossen. Das Tablett 2 ist als dicke Platte aus Hartschaum mit geschlossener Außenhaut ausgebildet, auf deren Oberfläche die Markierungsstege 12 für Suppe, 13 für Essen und 14 für Getränk ausgeformt sind, die eine genaue Positionierung der Geschirre gewährleisten, Dicht unter jedem Geschirrplatz ist eine Induktionsspule 12i bzw 13i bzw 14i sowie eine Antenne 12a bzw. 13a bzw. 14a in das Tablett eingelassen, die sämtlich an die Regelelektronik 11 angeschlossen sind, welche die Erhitzung und Warmhaltung der Speisen durch die Induktionsspulen entsprechend dem an der Tastatur 8 eingegebenen Programm nach den Signalen der Antennen regelt und den Vollzug des Programms, d h., den Warmhaltezustand für jedes Tablett 2 einzeln an den Bildschirm 9 zurückmeldet.

Wie in dem Vertikalschnitt gemäß Figur 1 durch das Tablett 2 ersichtlich, verhindert eine dicke Hartschaum-Unterschicht des Tabletts 2 die Wärmeübertragung zwischen zwei jeweils übereinander stehenden Tabletts.

## Patentansprüche

1. Erhitzungsstation (1) für Gruppenverpflegung mit Tabletts (2), auf denen Fertigmenüs induktiv erhitzt und warmgehalten werden, und bei der jedes Tablett (2) so viele Induktionsspulen (12i, 13i, 14i) aufweist, wie das Fertigmenü Speisen und Getränke, d. h. Geschirre mit induktiv erhitzbarem Boden enthält, **dadurch gekennzeichnet, dass** jeder Induktionsspule eines Tabletts eine Antenne (12a, 13a, 14a) zugeordnet ist, die in an sich bekannter Weise berührungslos durch Hochfrequenz-Funk die Temperatur des Bodens des über der Induktionsspule stehenden Geschirrs ermittelt, wobei diese Temperatur laufend an eine in jedes Tablett (2) eingebaute Regelelektronik (11) gemeldet wird, welche die Induktionsleistung der betreffenden Induktionsspule derart steuert, dass eine voreinstellbare, der Speise entsprechende Temperatur erreicht und eingehalten wird.

2. Erhitzungsstation nach Anspruch 1, **dadurch gekennzeichnet, dass** jedes Tablett (2) nur eine Regelelektronik (11) enthält, die gleichzeitig als Hochfrequenzquelle für die Antennen (12a, 13a, 14a) des betreffenden Tabletts dient, die Bodentemperaturen der verschiedenen Geschirre auf dem Tablett über die entsprechenden Antennen laufend periodisch nacheinander abfragt und die Induktionsleistungen der verschiedenen Induktionsspulen (12i, 13i, 14i) entsprechend steuert.

3. Erhitzungsstation nach Anspruch 2, **dadurch gekennzeichnet, dass** sich im Tablett über jeder Induktionsspule eine dem betreffenden Geschirr angepasste Markierung (12, 13, 14) befindet, welche die genaue Positionierung des Geschirrs gewährleistet.

4. Erhitzungsstation nach Anspruch 3, **gekennzeichnet durch** einen zentralen Induktions-Leistungsgenerator (6) und eine zentrale Informationseinheit (7) sowie Übertrager (4) und (5) auf den Etagen für die Tabletts (2), von denen Induktionsleistung und Informationen kontaktlos transformatorisch auf die Regelelektroniken (11) der einzelnen Tabletts übertragen werden, wobei die Übertrager (5) Informationen in beiden Richtungen weitergeben.

5. Erhitzungsstation nach Anspruch 4, **dadurch gekennzeichnet, dass** die Funktionsteile (Induktionsspulen, Antennen, Regelelektronik, Übertragerhälften) auf einem gemeinsamen Träger angeordnet sind, der in das Tablett eingegossen ist oder das Tablett bildet.

6. Erhitzungsstation nach Anspruch 5, **gekennzeichnet durch** eine wärmeisolierende Schicht auf der Unterseite jedes Tabletts (2).

## Claims

1. Heating station (1) for group catering which has trays (2), on which prepared menus are heated and kept warm in an inductive manner, and in which each tray (2) has as many induction coils (12i, 13i, 14i) as the prepared menu contains meals and drinks, that is to say, items of crockery with an inductively heatable base, **characterised in that** there is associated, with each induction coil of a tray, an antenna (12a, 13a, 14a) which establishes the temperature of the base of the item of crockery located above the induction coil in a contactless manner known per se by means of high-frequency radio waves, this temperature being constantly transmitted to an electronic adjustment system (11) which is integrated in each tray (2) and which controls the induction power of the relevant induction coil in such a manner that a predeterminable temperature which corresponds to the meal is reached and maintained.

2. Heating station according to claim 1, **characterised in that** each tray (2) contains only one electronic adjustment system (11) which at the same time acts as a high-frequency source for the antennae (12a, 13a, 14a) of the relevant tray, requests the base temperatures of the various items of crockery on the tray periodically one after the other in a continuous manner via the corresponding antennae, and controls the induction power levels of the various induction coils (12i, 13i, 14i) accordingly.

3. Heating station according to claim 2, **characterised in that** in the tray over each induction coil there is a marking (12, 13, 14) which is adapted to the relevant item of crockery and which ensures the precise positioning of the item of crockery.

4. Heating station according to claim 3, **characterised by** a central induction power generator (6) and a central data unit (7) and transmitters (4) and (5) on the levels for the trays (2), from which induction power and data are transmitted in a contactless and transformer-like manner to the electronic adjustment systems (11) of the individual trays, the transmitters (5) transmitting data in both directions.

5. Heating station according to claim 4, **characterised in that** the function components (induction coils, antennae, electronic adjustment system, transmitter halves) are arranged on a common carrier which is cast in the tray or which forms the tray.

6. Heating station according to claim 5, **characterised by** a thermal insulating layer at the lower side of each tray (2).

## Revendications

1. Poste de réchauffage (1) pour restauration collective, avec des plateaux (2) sur lesquels des menus préparés sont réchauffés et maintenus au chaud par induction, chaque plateau (2) présentant autant de bobines d'induction (12i, 13i, 14i) que le menu préparé contient d'aliments solides et liquides, c'est-à-dire de récipients ayant un fond pouvant être chauffé par induction, **caractérisé en ce qu'**une antenne (12a, 13a, 14a) est associée à chaque bobine d'induction d'un plateau, antenne qui, d'une manière en soi connue, détermine sans contact par radiotransmission à haute fréquence la température du fond du récipient se trouvant au-dessus de la bobine d'induction, sachant que cette température est signalée en continu à une électronique de régulation (11) incorporée dans chaque plateau (2), laquelle commande la puissance d'induction de la bobine d'induction concernée de telle sorte qu'une température préréglable, correspondant à l'aliment, est atteinte et maintenue.

2. Poste de réchauffage selon la revendication 1, **caractérisé en ce que** chaque plateau (2) contient seulement une électronique de régulation (11), qui sert en même temps de source de haute fréquence pour les antennes (12a, 13a, 14a) du plateau concerné, qui consulte en continu, périodiquement les unes après les autres, les températures de fond des différents récipients se trouvant sur le plateau par l'intermédiaire des antennes correspondantes, et qui commande en conséquence les puissances d'induction des différentes bobines d'induction (12i, 13i, 14i).

3. Poste de réchauffage selon la revendication 2, **caractérisé en ce qu'**un repère (12, 13, 14) adapté au récipient concerné se trouve sur le plateau au-dessus de chaque bobine d'induction, et il assure le positionnement exact du récipient.

4. Poste de réchauffage selon la revendication 3, **caractérisé par** un générateur (6) de puissance d'induction central et par une unité d'information centrale (7), ainsi que par des transmetteurs (4) et (5) sur les étages pour les plateaux (2), transmetteurs par lesquels la puissance d'induction et des informations sont transmises sans contact par transformation aux électroniques de régulation (11) des différents plateaux, les transmetteurs (5) transmettant des informations dans les deux directions.

5. Poste de réchauffage selon la revendication 4, **caractérisé en ce que** les éléments fonctionnels (bobines d'induction, antennes, électronique de régulation, moitiés de transmetteurs) sont disposés sur un support commun, qui est moulé dans le plateau ou qui forme le plateau.

6. Poste de réchauffage selon la revendication 5, **caractérisé par** une couche thermoisolante sur le dessous de chaque plateau (2).
